# EUROPÄISCHE PATENTSCHRIFT

(11) **EP 4 363 754 B1**
(45) Veröffentlichungstag und Bekanntmachung des Hinweises auf die Patenterteilung: **19.03.2025**
(21) Anmeldenummer: 22734108.8
(22) Anmeldetag: 10.06.2022
(51) Int. Cl.: F16L 37/088, G06K 19/07, G06K 19/077

(54) **VORRICHTUNG ZUR PRÜFUNG DES KORREKTEN SITZES EINER STECKKUPPLUNG**
DEVICE FOR CHECKING THE CORRECT FIT OF A PLUG-IN COUPLING
DISPOSITIF DE CONTRÔLE DE L'AJUSTEMENT CORRECT D'UN RACCORD ENFICHABLE

(30) Priorität: 30.06.2021 DE 102021206883
(43) Veröffentlichungstag der Anmeldung: 08.05.2024
(73) Patentinhaber: ContiTech Techno-Chemie GmbH, 61184 Karben (DE)
(72) Erfinder: LINZMAIER, Markus, 30165 Hannover (DE); BORCHERT, Lukas, 30165 Hannover (DE); REUTTER, Kilian, 30165 Hannover (DE); ZIPF, Thomas, 30165 Hannover (DE)
(74) Vertreter: Continental Corporation
(86) Internationale Anmeldenummer: PCT/DE2022/200121
(87) Internationale Veröffentlichungsnummer: WO 2023/274467

(56) Entgegenhaltungen:
- CA-A1- 3 115 320
- DE-A1- 102019 134 645
- US-A1- 2020 309 298

## Beschreibung

Die Erfindung betrifft eine Vorrichtung zur Prüfung des korrekten Montagezustandes einer Fluid-Steckkupplung, aufweisend eine Fluid-Steckkupplung mit einem Vaterteil und einem Mutterteil.

Fluidkupplung der gattungsgemäßen Art werden in großer Vielfalt sowohl in industriellen Anwendungen, als auch im Automobilbau eingesetzt. Beispielhaft sei hier die VDA-Kupplung oder SAE-Kupplung genannt, die als Standard-Steckkupplungen im Automobilbau Verwendung finden. Die DE 10 2017 212 004 A1 zeigt beispielhaft eine VDA Kupplung.

Die genannten Kupplungen weisen ein Vaterteil und einem Mutterteil auf, die bei der Montage zusammengesteckt werden und bei korrektem Zusammenstecken in einer vorbestimmten Position zueinander verriegelt werden. Diese Verriegelung erfolgt meist selbsttätig beim Zusammenstecken der Kupplungsteile.

Bei fehlerhafter Montage kann es zu Ausfällen kommen, wenn die Verriegelung der Kupplungsteile nicht ordnungsgemäß erfolgt. Es gibt daher Lösungsansätze, die ordnungsgemäße Verriegelung der Kupplungen zu überwachen. Gängige Überwachungsmethoden basieren beispielsweise auf optischen Signalen, die bei ordnungsgemäßer Verriegelung der Kupplung sichtbar werden oder verschwinden. Die Wirksamkeit solcher Einrichtungen ist aber in schwierigen Einbausituationen nicht immer gewährleistet.

Es sind auch Lösungen bekannt, bei denen mittels in den Steckkupplungsteilen integrierte RFID-Chips überprüfbar ist, ob die zusammengehörigen Kupplungsteile zusammengesteckt sind, wobei auf den RFID-Chips Informationen gespeichert sind, die sich beispielsweise auf die zu fördernden Fluiden oder auf Temperaturen oder andere physikalische Kennwerte der Fluide beziehen und die mittels eines externen Lesegeräts ausschließbar sind. Ein Beispiel für eine solche Anordnung ist die WO 2006/036863 A1.

Eine Überprüfung auf ordnungsgemäße Verriegelung der beiden Kupplungsteile ist mit dieser Anordnung jedoch nicht möglich.

Die DE 10 2019 134 645 A1 offenbart eine Fluidkupplung mit einem Kupplungsteil, das mit einer Empfänger- und/oder Sendeeinrichtung und einem diese abschirmenden Abschirmelement versehen ist. Beim Verbinden des Kupplungsteils mit einem weiteren Kupplungsteil wird das Abschirmelement verschoben, so dass die Empfänger- und/oder Sendeeinrichtung Signale Senden und/oder Empfangen kann.

Der Erfindung lag die Aufgabe zugrunde, eine Vorrichtung der eingangs geschilderten Art zu schaffen, die auch in unübersichtlichen Einbausituationen zuverlässig das ordnungsgemäße einrasten der genannten Steckkupplungen signalisiert.

Diese Aufgabe wird dadurch gelöst, dass das Vaterteil einen RFID-Chip aufweist und das Mutterteil eine elektromagnetische Abschirmung aufweist und Vaterteil und Mutterteil Kupplungsteil ineinandersteckbar sind und eine Verriegelungseinrichtung aufweisen, mit der in einer vorbestimmten Position der Kupplungsteile zueinander eine Verriegelung der Kupplungsteile miteinander erreichbar ist, wobei die Lage des RFID-Chips auf dem Vaterteil und die Lage der Abschirmung auf dem Mutterteil derart aufeinander abgestimmt ist, dass nur bei Verriegelung der Kupplungsteile in der vorbestimmten Position der RFID-Chip vollständig von der Abschirmung abgeschirmt wird.

Diese Anordnung hat die folgenden vorteilhaften Eigenschaften, nämlich
- in unverriegeltem Zustand der Kupplungsteile ist der RFID-Chips von einem externen Lesegerät detektierbar, da er nicht von der Abschirmung abgeschirmt ist.
- In ordnungsgemäß verriegeltem Zustand ist der RFID-Chip gerade genau von der Abschirmung abgeschirmt und kann so nicht von einem externen Lesegerät detektiert werden.

Diese Anordnung ermöglicht also, bei Abweichungen von der vorbestimmten Verriegelungslage der Kupplungsteile zueinander den RFID-Chips zu detektieren, woran erkennbar ist, dass keine ordnungsgemäße Verriegelung der Kupplungsteile vorliegt. Da externe Lesegeräte auch Abstände von einigen Metern des RFID-Chips detektieren können, ist eine zuverlässige Erkennung in optisch unübersichtlichen oder schwer zugänglichen Stellen trotzdem möglich.

In einer Weiterbildung der Erfindung ist der RFID-Chip auf das Vaterteil aufgeklebt.

Das Aufkleben vermeidet ein teures Werkzeug zum Umspritzen des RFID-Chips.

In einer Weiterbildung der Erfindung weist der RFID-Chip eine teilringförmige Antenne auf, die aus zwei nahezu halbkreisförmigem Halbteilen ausgebildet ist , die an gegenüberliegenden Seiten des RFID-Chips angeordnet sind und eine Federsteifigkeit aufweisen, mit der die Antenne eine Ringfeder ähnlich eines Sprengringes bildet und weist das Vaterteil eine Ringnut auf, in die die federsteife Antenne des RFID-Chips einclipsbar ist.

Diese Anordnung hat den Vorteil, dass der RFID-Chip eine zuverlässig definierte Lage aufweist und durch das Einclipsen in die Ringnut gut gegen Abrieb geschützt ist.

In einer Weiterbildung der Erfindung ist die Abschirmung des Mutterteils als aufgedruckter Ring aus elektrisch abschirmendem Material ausgebildet.

Das Drucken, beispielsweise mit elektrisch leitfähigen Tinten mittels eines Tintenstrahl-Druckkopfes ist eine besonders vielseitige Möglichkeit, ohne dass ein aufwändiges Spritzgusswerkzeug benötigt wird.

In einer Weiterbildung der Erfindung ist die Abschirmung als elektrisch leitfähige Folie ausgebildet, die eine ringförmige, geschlitzte Kontur und eine Federsteifigkeit aufweist und weist das Mutterteil eine ringförmige Nut auf, in die die federsteife, geschlitzte Ringfolie einclipsbar ist.

Diese Ausführungsform ermöglicht eine einfache Herstellung der Kupplungsteile ohne dass ein aufwändiges Spritzgießwerkzeug benötigt wird.

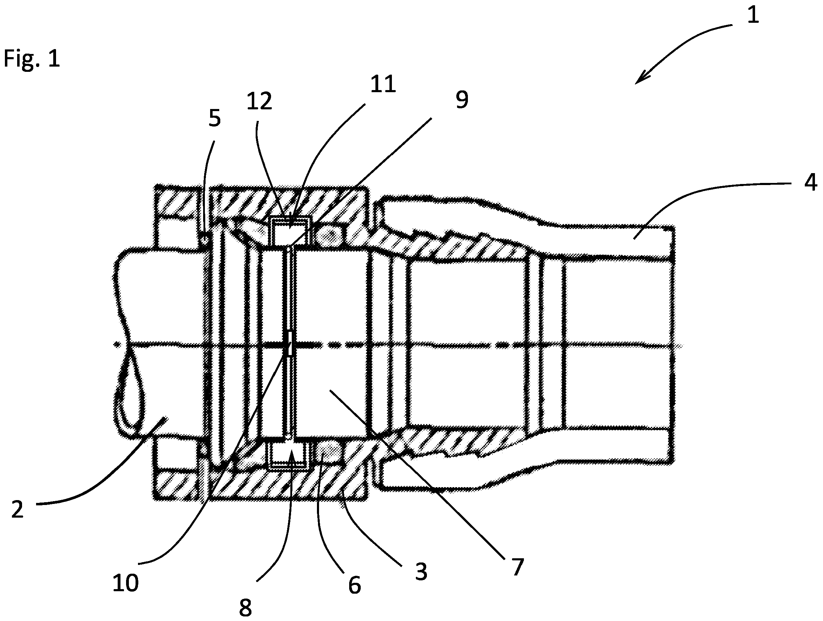

Anhand der Zeichnung wird nachstehend ein Ausführungsbeispiel der Erfindung näher erläutert. Die Fig. 1 zeigt eine Fluid-Steckkupplung 1 mit Vaterteil 2 und Mutterteil 3 in einer Prinzipdarstellung als Längsschnitt. Auf das Mutterteil 3 ist ein Schlauch 4 aufgesteckt. Vaterteil 2 und Mutterteil 3 sind zusammengesteckt und mittels einer Federklammer 5 miteinander verriegelt. Eine O-Ring-Dichtung 6 dichtet das Vaterteil 2 gegen das Mutterteil 3 ab.

Das Vaterteil 2 weist an seinem in das Mutterteil 3 eingestecktem Stutzenteil 7 eine Ringnut 8 auf, in der eine ringförmige, geschlitzte Ringfeder 9 eingeclipst ist. An der Ringfeder 9 ist ein RFID-Chip 10 angeordnet, der mit der Ringfeder 9 elektrisch leitend in Verbindung steht. Dadurch wirkt die Ringfeder 9 als Antenne für den RFID-Chips 10.

Das Mutterteil 3 weist ebenfalls eine Ringnut 11 auf, in der eine geschlitzte Ringfolie 12 angeordnet ist. Die Ringfolie 12 weist eine Federsteifigkeit auf und ist in die Ringnut 11 eingeclipst. Die Ringfolie 11 ist aus einem Material ausgebildet, welches elektromagnetisch abschirmend wirkt.

Im gezeigten ordnungsgemäß verriegelten Zustand der Kupplung 1 liegen sich die Antenne 9 und die elektromagnetische Abschirmfolie 12 axial gegenüber, die Abschirmfolie 12 schirmt die Antenne 9 in dieser Position gerade genau gegen die Funkstrahlen eines hier nicht gezeigten RFID-Lesegerätes ab, dadurch kann das Lesegerät den RFID-Chips nicht detektieren.

Sind Vaterteil 2 und Mutterteil 3 nicht ordnungsgemäß verriegelt, führt dies zu Abweichungen der axialen Lage von Antenne 9 und Abschirmfolie 12 gegeneinander. Damit ist eine vollständige Abschirmung der Antenne 9 nicht mehr gegeben, sodass das Lesegerät in einem solchen Fall den RFID-Chips 10 erkennt und beispielsweise eine entsprechende Fehlermeldung ausgeben kann.

### Bezugszeichenliste

### (Teil der Beschreibung)

- 1: Fluid-Steckkupplung
- 2: Vaterteil der Fluid-Steckkupplung 1
- 3: Mutterteil der Fluid-Steckkupplung 1
- 4: Schlauch
- 5: Federklammer
- 6: O-Ring-Dichtung
- 7: Stutzenteil des Vaterteils 2
- 8: Ringnut im Stutzenteil 7
- 9: Ringfeder, Antenne
- 10: RFID-Chip
- 11: Ringnut im Mutterteil 3
- 12: abschirmende Ringfolie

## Patentansprüche

1. Vorrichtung zur Prüfung des korrekten Montagezustandes einer Fluid-Steckkupplung (1), aufweisend eine Fluid-Steckkupplung (1) mit einem Vaterteil (2) und einem Mutterteil (3), wobei Vaterteil (2) und Mutterteil (3) ineinandersteckbar sind und eine Verriegelungseinrichtung (5) aufweisen, mit der in einer vorbestimmten Position der Kupplungsteile (2, 3) zueinander eine Verriegelung der Kupplungsteile (2, 3) miteinander erreichbar ist, wobei das Vaterteil (2) einen RFID-Chip (10) aufweist, **dadurch gekennzeichnet, dass** das Mutterteil (3) eine elektromagnetische Abschirmung (12) aufweist, wobei die Lage des RFID-Chips (10) auf dem Vaterteil (2) und die Lage der Abschirmung (12) auf dem Mutterteil (3) derart aufeinander abgestimmt ist, dass nur bei Verriegelung der Kupplungsteile (2, 3) in der vorbestimmten Position der RFID-Chip (10) vollständig von der Abschirmung (12) abgeschirmt wird.

2. Vorrichtung nach Anspruch 1, **dadurch gekennzeichnet, dass** der RFID-Chip (10) auf das Vaterteil (2) aufgeklebt ist.

3. Vorrichtung nach Anspruch 1, **dadurch gekennzeichnet, dass** der RFID-Chip (10) eine teilringförmige Antenne (9) aufweist, die aus zwei nahezu halbkreisförmigem Halbteilen ausgebildet ist, die an gegenüberliegenden Seiten des RFID-Chips (10) angeordnet sind und eine Federsteifigkeit aufweisen, mit der die Antenne (9) eine Ringfeder ähnlich eines Sprengringes bildet und dass das Vaterteil (2) eine Ringnut (8) aufweist, in die die federsteife Antenne (9) des RFID-Chips (10) einclipsbar ist.

4. Vorrichtung nach mindestens einem der vorstehenden Ansprüche, **dadurch gekennzeichnet, dass** die Abschirmung (12) des Mutterteils (3) als aufgedruckter Ring aus elektrisch abschirmendem Material ausgebildet ist.

5. Vorrichtung nach mindestens einem der Ansprüche 1 bis 4, **dadurch gekennzeichnet, dass** die Abschirmung (12) als elektrisch leitfähige Folie (12) ausgebildet ist, die eine ringförmige, geschlitzte Kontur und eine Federsteifigkeit aufweist und dass das Mutterteil (3) eine ringförmige Nut (11) aufweist, in die die federsteife, geschlitzte Ringfolie (12) einclipsbar ist.

## Claims

1. Device for checking for the correct installation state of a fluid plug-in coupling (1), having a fluid plug-in coupling (1) with a male part (2) and a female part (3), wherein the male part (2) and the female part (3) can be inserted one into the other and have a locking means (5) with which, in a predetermined position of the coupling parts (2, 3) in relation to each other, locking of the coupling parts (2, 3) to each other can be achieved, wherein the male part (2) has an RFID chip (10), **characterized in that** the female part (3) has an electromagnetic shield (12), wherein the position of the RFID chip (10) on the male part (2) and the position of the shield (12) on the female part (3) are matched to each other in such a way that the RFID chip (10) is completely shielded by the shield (12) only when the coupling parts (2, 3) are locked in the predetermined position.

2. Device according to Claim 1, **characterized in that** the RFID chip (10) is adhesively bonded to the male part (2).

3. Device according to Claim 1, **characterized in that** the RFID chip (10) has a partial ring-shaped antenna (9) which is formed from two virtually semicircular half-parts, which are arranged on opposite sides of the RFID chip (10) and have a spring stiffness with which the antenna (9) forms an annular spring similar to a snap ring, and **in that** the male part (2) has an annular groove (8) into which the spring-stiff antenna (9) of the RFID chip (10) can be clipped.

4. Device according to at least one of the preceding claims, **characterized in that** the shield (12) of the female part (3) is in the form of a printed ring composed of electrically shielding material.

5. Device according to at least one of Claims 1 to 4, **characterized in that** the shield (12) is in the form of an electrically conductive foil (12) which has an annular, slotted contour and a spring stiffness, and **in that** the female part (3) has an annular groove (11) into which the spring-stiff, slotted annular foil (12) can be clipped.

## Revendications

1. Dispositif de contrôle de l'état de montage correct d'un raccord enfichable pour fluide (1), présentant un raccord enfichable pour fluide (1) ayant une partie mâle (2) et une partie femelle (3), dans lequel la partie mâle (2) et la partie femelle (3) peuvent être enfichées l'une dans l'autre et présentent un dispositif de verrouillage (5) qui permet d'obtenir un verrouillage des parties de raccord (2, 3) l'une avec l'autre dans une position prédéterminée des parties de raccord (2, 3) l'une par rapport à l'autre, dans lequel la partie mâle (2) présente une puce RFID (10), **caractérisé en ce que** la partie femelle (3) présente un blindage électromagnétique (12), dans lequel la position de la puce RFID (10) sur la partie mâle (2) et la position du blindage (12) sur la partie femelle (3) sont coordonnées l'une avec l'autre de telle sorte que la puce RFID (10) n'est blindée complètement par le blindage (12) qu'en cas de verrouillage des parties de raccord (2, 3) dans la position prédéterminée.

2. Dispositif selon la revendication 1, **caractérisé en ce que** la puce RFID (10) est collée sur la partie mâle (2).

3. Dispositif selon la revendication 1, **caractérisé en ce que** la puce RFID (10) présente une antenne (9) en forme d'anneau partiel qui est réalisée à partir de deux demi-parties presque en forme de demi-cercle, qui sont disposées sur des côtés opposés de la puce RFID (10) et présentent une rigidité de ressort par laquelle l'antenne (9) constitue un ressort annulaire similaire à un circlips, et **en ce que** la partie mâle (2) présente une rainure annulaire (8) dans laquelle l'antenne (9) à rigidité de ressort de la puce RFID (10) peut être clipsée.

4. Dispositif selon au moins l'une des revendications précédentes, **caractérisé en ce que** le blindage (12) de la partie femelle (3) est réalisé sous la forme d'un anneau imprimé en un matériau pouvant être blindé électriquement.

5. Dispositif selon au moins l'une des revendications 1 à 4, **caractérisé en ce que** le blindage (12) est réalisé comme un film (12) électriquement conducteur qui présente un contour fendu annulaire et une rigidité de ressort, et **en ce que** la partie femelle (3) présente une rainure annulaire (11) dans laquelle le film annulaire (12) fendu à rigidité de ressort peut être clipsé.
